# EUROPEAN PATENT APPLICATION

(11) **EP 3 070 948 A1**
(43) Date of publication of application: **21.09.2016**
(21) Application number: 15159403.3
(22) Date of filing: 17.03.2015
(51) Int. Cl.: H04N 19/91, H04N 19/13, H04N 19/149, H04N 19/184, H04N 19/169

(54) **A system and a method for determining cost of application of a coding type in a video encoder**

(30) Priority: 16.03.2015 PL 41157415
(71) Applicant: Politechnika Poznanska, 60-965 Poznan (PL)
(72) Inventor: Domanski, Marek, 61-615 Poznan (PL); Grajek, Tomasz, 61-249 Poznan (PL); Karwowski, Damian, 61-131 Poznan (PL); Klimaszewski, Krzysztof, 62-095 Murowana Goslina (PL); Stankiewicz, Olgierd, 61-148 Poznan (PL); Stankowski, Jakub, 61-647 Poznan (PL); Wegner, Krzysztof, 62-095 Murowana Goslina (PL)
(74) Representative: Eupatent.pl

(57) **Abstract**

A system for determining cost of application of a coding type in a video encoder wherein the video encoder comprises a context-based adaptive binary arithmetic coding (CABAC) module wherein the Context-based adaptive binary arithmetic coding module comprises a binarization module (102) configured to assign a variable-length input string of bits to a syntax element, wherein the complete stream of bins, present at the output of the binarization module (102), is divided into a number of sub-streams. The system further comprises: a selectively applied mode of operation configured to determine a cost of application of a coding type in said video encoder; wherein upon selection of said mode, the system is configured to input the sub-streams to a "binarization output, relational table" module (106) configured to relate each sub-stream to a bit cost and to output said bit cost for each sub-stream.

## Description

### TECHNICAL FIELD

The present invention relates to a system and method for determining cost of application of a coding type in a video encoder. In particular, the present invention relates to decreasing coding time and/or video encoder's resources due to a resource-effective method for estimation of a cost of application of a video coding type.

### BACKGROUND

High Efficiency Video Coding (HEVC) is a video compression standard. HEVC is a successor to H.264/MPEG-4 AVC (Advanced Video Coding), which was jointly developed by the ISO/IEC JTC 1/SC 29/WG 11 Moving Picture Experts Group (MPEG) and ITU-T SG16/Q.6 Video Coding Experts Group (VCEG) as ISO/IEC 23008-2 MPEG-H Part 2 and ITU-T H.265. MPEG and VCEG established a Joint Collaborative Team on Video Coding (JCT-VC) to develop the HEVC standard. Version 1 of HEVC was finalized on January 25, 2013 and the specification was formally ratified as a standard on April 13, 2013.

HEVC is said to double the data compression ratio compared to H.264/MPEG-4 AVC at the same level of video quality. It can alternatively be used to provide substantially improved video quality at the same bit rate. It can support up to 8K UHD 8192x4320 video resolution (source: Wikipedia).

The aforementioned advantages come at a cost of complexity of both encoders and decoders.

The first version of the standard was completed, approved, and published in 2013. The second version was completed and approved in 2014 and published in early 2015.

Context-based adaptive binary arithmetic coding (CABAC) is a form of entropy encoding used in the H.264/MPEG-4 AVC and High Efficiency Video Coding (HEVC) standards. It is a lossless compression technique, although the video coding standards, in which it is used, are typically for lossy compression applications. CABAC is notable for providing much better compression than most other entropy encoding algorithms used in video encoding, and it is one of the key elements that provides the H.264/AVC encoding scheme with better compression capability than its predecessors.

In H.264/MPEG-4 AVC, CABAC is only supported in the Main and higher profiles of the standard, as it requires a larger amount of processing to decode than the simpler scheme known as Context-adaptive variable-length coding (CAVLC) that is used in the standard's Baseline profile. CABAC is also difficult to parallelize and vectorize, so other forms of parallelism (such as spatial region parallelism) may be coupled with its use. In HEVC, CABAC is used in all profiles of the standard (source: Wikipedia).

In a hybrid video encoder (eg. AVC, HEVC) there may be distinguished two processing stages: 1) selection of the best encoding mode (block size, type and direction of prediction etc.) and 2) the final compression of an image block with a use of the selected encoding mode together with entropy coding of syntax elements.

Within the first stage, the encoder takes a decision regarding encoding method of different blocks, including a decision regarding image division into smaller sections (blocks), coding mode for the blocks (INTRA, INTER) as well as prediction direction in case of INTRA coding. The decision regarding coding method for separate blocks is taken based on a total cost of use of a given coding type (also referred to as a "coding mode"). This cost may be determined for all available modes (as well as variants of division of an image into blocks), after which the encoder selects a mode of the lowest total cost.

There is therefore a need to design an improved system and method for determining cost of application of a coding type in a video encoder. The system should decrease the complexity of estimation of cost of application of a coding type.

### SUMMARY

The present invention relates to a system for determining cost of application of a coding type in a video encoder wherein the video encoder comprises: a context-based adaptive binary arithmetic coding (CABAC) module wherein the Context-based adaptive binary arithmetic coding module comprises a binarization module configured to assign a variable-length input string of bits to a syntax element, wherein the complete stream of bins, present at the output of the binarization module, is divided into a number of sub-streams. The system further comprises: a selectively applied mode of operation configured to determine a cost of application of a coding type in said video encoder; wherein upon selection of said mode, the system is configured to input the sub-streams to a "binarization output, relational table" module configured to relate each sub-stream to a bit cost and to output said bit cost for each sub-stream.

Preferably, the relation of each sub-stream to a bit cost is such that a given number of bins after binarization, for each sub-stream, is related to a predefined number of bits.

Preferably, the relation of each sub-stream to a bit cost is such that for each sub-stream there is provided a formula for calculating the number of bits based on the number of bins of a given sub-stream.

Preferably, the relation of each sub-stream to a bit cost stored in the "binarization output, relational table" module is built in advance, for a given implementation of a CABAC encoder, on the basis of test results obtained for a set of test video sequences.

Preferably, the relation of each sub-stream to a bit cost stored in the "binarization output, relational table" module is built 'on the fly' during encoding the video material.
The present invention also relates to a method for determining cost of application of a coding type in a video encoder. The method comprises the steps of: providing syntax elements of image blocks to a binarization module; obtaining a number of binarization output bins for each sub-stream; finding a reference cost value for each sub-stream in a "binarization output, relational table" module configured to relate each sub-stream to a bit cost and to output said bit cost for each sub-stream.

Preferably, the method further comprises a step of summing the cost value for all sub-streams and outputting the total cost as an estimated number of bits.

The present invention also relates to a computer program comprising program code means for performing all the steps of the computer-implemented method as described above when said program is run on a computer, as well as to a computer readable medium storing computer-executable instructions performing all the steps of the computer-implemented method as defined above.

### BRIEF DESCRIPTION OF THE DRAWINGS

These and other objects of the invention presented herein, are accomplished by providing a system and method for determining cost of application of a coding type in a video encoder. Further details and features of the present invention, its nature and various advantages will become more apparent from the following detailed description of the preferred embodiments shown in a drawing, in which:
Fig. 1 presents a diagram of the system according to the present invention; and
Fig. 2 presents a diagram of the method according to the present invention.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DETAILED DESCRIPTION

The known implementations of AVC and HEVC encoders, at the aforementioned first stage, apply one of two methods for cost determination.

The first method equals cost with distortion, wherein distortion is a measure of how different the encoded block is from the input block. This method is relatively fast but does not guarantee a selection of a best coding mode for that particular block. The present invention is not related to this approach.

The second method is more accurate in terms of estimation but is far more complex in terms of computational effort. This method is based on an equation wherein Total_Cost = Distortion + lambda * Bit_Cost. The Distortion is a measure of how different the encoded block is from the input block, the lambda is a Lagrange multiplier, while the Bit_Cost is a bits count required to encode the selected block with a selected coding mode.

The aforementioned Bit_Cost may be determined in many different ways. The basic method is to actually execute the full encoding process, including entropy coding of data. In this case, the cost of using the mode is calculated in the HEVC encoder on the basis of size of the data stream that is produced by CABAC encoder. Performing the full path of CABAC encoding in the process of mode testing results in very accurate estimation of cost of the mode, but it is associated with great computational complexity of the method.

The present invention is based on selected parts of a CABAC encoder, but aims at decreasing the computational effort, while still obtaining high accuracy of estimation.

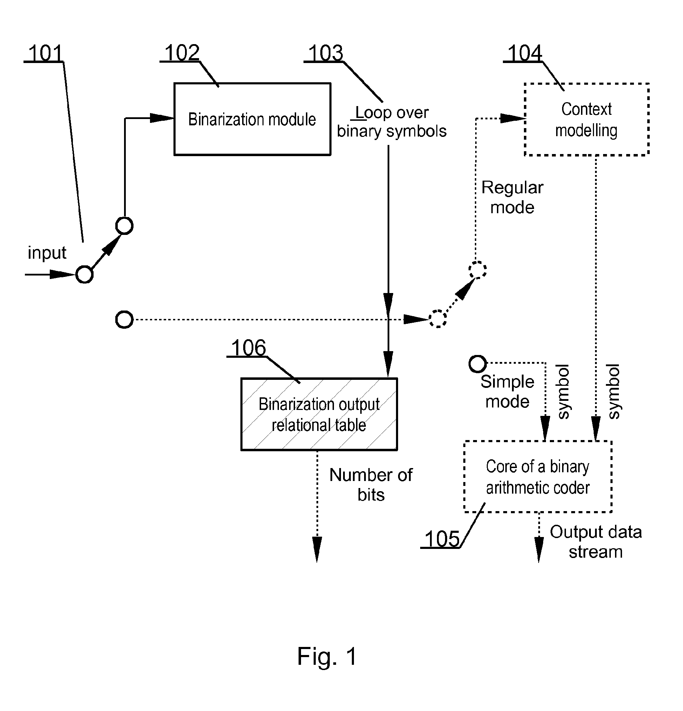

Fig. 1 presents a diagram of the system according to the present invention. The system is based on a typical CABAC coder, in which three main modules may be defined. The syntax elements of image block are fed into a switch 101, that depending on the configuration of the CABEC coder, selects a regular mode or a bypass mode. In case of a regular mode selection, a syntax element is passed to a binarization module 102, in order to assign a variable-length string of bits to a syntax element. Individual bits of the string are also referred to as *bins.* These bins are further compressed through using adaptive arithmetic encoding process to generate CABAC bits that are inserted into an output compressed video bitstream.

For each bin that is encoded in a regular mode, there is calculated a probability of its presence in the input data stream, which is effected by a context modeling module 104. The obtained probability is fed, together with the bin, to a core of a binary arithmetic coder 105 which performs the compression of the bin and outputs a data stream.

A CABAC coder may also switch into a bypass mode, in which the context modeling is not executed. As a result, the bypass mode is computationally much more simpler than a regular mode.

In the CABAC technique, the complete stream of bins present at the output of the binarization module 102, is divided into a high number of smaller streams (hereinafter referred to as sub-streams). There are 460 sub-streams in AVC and 135 in HEVC.

In this manner, the calculation of probabilities is independently executed for each of the sub-streams in a loop 103.

According to the present invention, a CABAC encoder may be enhanced with another mode, that may be used during a process of determining cost of application of a coding type in a video encoder. In the new mode, the output of sub-stream loop 103 is passed to a 'binarization output, relational table' module 106, and the modules 104 and 105 are not used. The module 106 comprises a reference table, that for each number of bins (after binarization), and for each of CABAC sub-streams provides a reference value denoting estimated number of bits that would be output by the core of a binary arithmetic coder 105. Such table may relate a given number of bins to a given number of bits, for each of CABAC sub-streams.

In an alternative embodiment, instead of a relational table, relational formulas (independent formula for each of CABAC sub-stream) may be used as a sufficiently good approximation. For example, for a given sub-stream the ratio of number_of_bits / number_of_bins may equal 0,8 while for another sub-stream the ratio may be different.

Both the table and the formulas may be built in advance, for a given implementation of a CABAC encoder, on the basis of test results obtained for a set of test video sequences, or may be built 'on the fly' during encoding the video material.

Thus, the 'binarization output, relational table' module 106 relates each sub-stream to a Bit_Cost.

The aforementioned system may be realized using dedicated components or custom made FPGA or ASIC circuits. The system may comprise a data bus communicatively coupled to a memory. Additionally, other components of the system are communicatively coupled to the system bus so that they may be managed by a controller.

The memory may store computer program or programs executed by the controller in order to execute steps of the method according to the present invention.

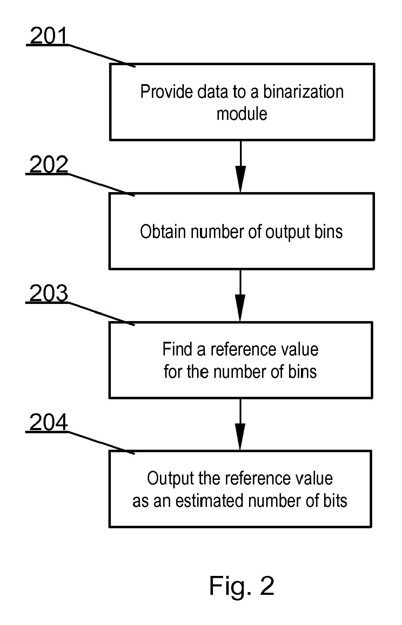

Fig. 2 presents a diagram of the method according to the present invention. The method calculates the Bit_Cost without employing the context modeling module 104 and the core of a binary arithmetic coder 105 in a typical CABAC technique.

The method starts at step 201 from providing syntax elements of image blocks to a binarization module 102. Subsequently, at step 202 there is obtained a number of binarization output bins.

The method according to the present invention, is based on an analysis (made independently for each of CABAC sub-streams (after binarization)) of a relation between the number of bits output by the core of a binary arithmetic coder 105 and the number of bins after binarization. First of all the inventors have determined that there actually exists a relation and the relation has been experimentally determined for each of sub-streams defined according to the CABAC technique.

The relation (number_of_bits / number_of_bins) is estimated separately for each of CABAC sub-streams in module 203 (although it is also possible to average the results and to use fewer number of relations, relative to the number of CABAC sub-streams). On the basis of this relation, and knowing the 'number_of_bins' at the output of binarization module 102, the Bit_Cost = number_of_bits is calculated in module 203 (separately for each of CABAC sub-streams). The Bit_Cost may be summed up for all sub-streams and output in step 204 as an estimated number of bits.

Due to a simplified procedure of estimation of the number of bits that would be output by the core of the binary arithmetic coder 105, there is a significant decrease in resources needed by a video encoder. At the same time, the obtained Bit_Cost results provide a relatively precise estimation results with respect to a full CABAC encoding as well as they do not introduce a relevant decrease in compression.

The present invention increases video encoding speed or alternatively decreases the resources required to encode at a given speed. Therefore, the invention provides a useful, concrete and tangible result.

The present invention processes computer-readable data and is applicable in a video data encoder, thus the machine or transformation test is fulfilled and the idea is not abstract.

It can be easily recognized, by one skilled in the art, that the aforementioned method for determining cost of application of a coding type in a video encoder, may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A system for determining cost of application of a coding type in a video encoder wherein the video encoder comprises:
- a context-based adaptive binary arithmetic coding (CABAC) module wherein the Context-based adaptive binary arithmetic coding module comprises a binarization module (102) configured to assign a variable-length input string of bits to a syntax element, wherein the complete stream of bins, present at the output of the binarization module (102), is divided into a number of sub-streams;
the system being **characterized in that** it further comprises:
- a selectively applied mode of operation configured to determine a cost of application of a coding type in said video encoder;
- wherein upon selection of said mode, the system is configured to input the sub-streams to a "binarization output, relational table" module (106) configured to relate each sub-stream to a bit cost and to output said bit cost for each sub-stream.

2. The system according to claim 1 **characterized in that** the relation of each sub-stream to a bit cost is such that a given number of bins after binarization, for each sub-stream, is related to a predefined number of bits.

3. The system according to claim 1 **characterized in that** the relation of each sub-stream to a bit cost is such that for each sub-stream there is provided a formula for calculating the number of bits based on the number of bins of a given sub-stream.

4. The system according to claim 1 **characterized in that** the relation of each sub-stream to a bit cost stored in the "binarization output, relational table" module (106) is built in advance, for a given implementation of a CABAC encoder, on the basis of test results obtained for a set of test video sequences.

5. The system according to claim 1 **characterized in that** the relation of each sub-stream to a bit cost stored in the "binarization output, relational table" module (106) is built 'on the fly' during encoding the video material.

6. A method for determining cost of application of a coding type in a video encoder, the method being **characterized in that** it comprises the steps of:
- providing (201) syntax elements of image blocks to a binarization module (102);
- obtaining (202) a number of binarization output bins for each sub-stream; and
- finding a reference cost value for each sub-stream in a "binarization output, relational table" module (106) configured to relate each sub-stream to a bit cost and to output said bit cost for each sub-stream.

7. The method according to claim 6 **characterized in that** it further comprises a step of summing the cost value for all sub-streams and outputting (204) the total cost as an estimated number of bits.

8. The method according to claim 6 **characterized in that** the relation of each sub-stream to a bit cost is such that a given number of bins after binarization, for each sub-stream, is related to a predefined number of bits.

9. The method according to claim 6 **characterized in that** the relation of each sub-stream to a bit cost is such that for each sub-stream there is provided a formula for calculating the number of bits based on the number of bins of a given sub-stream.

10. The method according to claim 6 **characterized in that** the relation of each sub-stream to a bit cost stored in the "binarization output, relational table" module (106) is built in advance, for a given implementation of a CABAC encoder, on the basis of test results obtained for a set of test video sequences.

11. The method according to claim 6 **characterized in that** the relation of each sub-stream to a bit cost stored in the "binarization output, relational table" module (106) is built or may be built 'on the fly' during encoding the video material.

12. A computer program comprising program code means for performing all the steps of the computer-implemented method according to any of claims 6-11 when said program is run on a computer.

13. A computer readable medium storing computer-executable instructions performing all the steps of the computer-implemented method according to any of claims 6-11 when executed on a computer.
